# EUROPEAN PATENT APPLICATION

(11) **EP 3 539 395 A1**
(43) Date of publication of application: **18.09.2019**
(21) Application number: 18161851.3
(22) Date of filing: 14.03.2018
(51) Int. Cl.: A23P 30/32, A23P 30/36, A23L 7/178

(54) **APPARATUS FOR PRODUCING PUFFED GRAIN FOOD PRODUCTS AND PUFFING PROCESS PERFORMED WITH SAID APPARATUS**

(71) Applicant: Schiappapietra Finanziaria S.r.l., 12052 Neive CN (IT)
(72) Inventor: Schiappapietra, Luigi, 12052 Neive CN (IT)
(74) Representative: Perani & Partners S.p.A.

(57) **Abstract**

The invention relates to an apparatus for producing puffed grain food products inside a cylindrical container (1), having one first end (A) with an opening (2) for loading the product to be puffed and for ejecting the puffed product. The second end (B), opposite to the first one, is closed by a base (17) and the latter is provided with at least an opening (21) connected to a conduit (25), for permitting communication of the container (1) with the outside environment and connected to a conduit (27) for alternatively permitting communication of the container (1) also with a source (V) of heating fluid, particularly dry steam. To this end conduits are provided with valve means (26, 31). The apparatus includes a cylindrical body (9) placed inside said cylindrical container (1) and coaxially extended between the first (A) and the second end (B) of the container forming an annular gap (10) therebetween. Said cylindrical body (9) is provided with a plurality of holes (11), radially and longitudinally arranged across its cylindrical wall, communicating between the said annular gap (10) and the interior of the container (1). The said cylindrical body (9) is also open at its end (12) facing the opening (2) of the cylindrical container (1) and it is closed at the opposite end (13). The opening (20, 21) of said base (17) is in communication with said annular gap (10) The invention also relates to the process implemented by the apparatus wherein, in the step of exhausting water steam which develops from cooking the product inside the cylindrical container (1) air is also drawn out and a relative vacuum is formed inside the container (1).

## Description

The present invention relates to an apparatus for producing puffed grain food products comprising a cylindrical container, said container having a first end with an opening for loading the product to be puffed and for ejecting the puffed product, said opening being equipped with a closing/opening member, a second end, opposite to the first end, said second end being closed by a base and the latter having at least one opening connected to a conduit for permitting communication of the interior of said container with the outside environment and to a conduit for alternatively permitting communication with a source of heating fluid, for heating the products to be puffed in the container, said conduits being equipped with valve means.

In alternative, said cylindrical container is mounted on a support base so as to rotate about its longitudinal axis. In that case, conventional sealing members are provided to allow operation even during rotation.

The invention also relates to the process implemented by such apparatus.

Food products to be puffed comprise cereals in general, rice, edible seeds as well as grain elements reconstituted from cereal and/or rice and/or edible seed flour.

The production of puffed-cereals based food products has been know for a long time. It is essentially based on three operative principles.

The first principle implies heating the product inside an autoclave allowing to completely transform the natural moisture contained in cereals grains or granules into steam.

The autoclave is air-tightly sealed by means of any type of valve and heating from outside continues until all the water contained is transformed into steam and reaches a pressure of 12-16 bars.

The subsequent and sudden opening of the valve causes a drop of pressure inside the autoclave and the consequent ejection of the puffed product.

Such operative principle requires a relatively long time to complete the treatment due to the required high temperatures and pressures, even though the equipment is simple and little expensive.

The product obtained through this operative principle is top quality and has a very low residual moisture content.

One known second operative principle is based on pre-heating the product in a rotating oven and on subsequent heating it in an autoclave through the introduction of steam into the autoclave.

Pre-heating allows to transform the natural moisture contained in cereals grains into steam.

The subsequent heating inside the autoclave, which is air-tightly sealed by any type of valve, makes the still existing water transform into steam when at least 3-6 pressure bars are reached. As described, for example, in Italian Patent No. 1,172,407 of 30.03.1983, the steam formed after cooking the product to be puffed, through the opening of a valve, is exhausted by the autoclave (discharge step) and subsequently heating is carried out through the introduction into the autoclave of dry steam until 12-16 pressure bars are reached. The subsequent and sudden opening of the valve causes a drop of pressure and the simultaneous ejection of the puffed product.

Apparatuses disclosed in Italian Patent No. 1188337 of 06.02.1986 and European Patent No.0,274,358 of 10.04.1987 are also, for instance, based on this treatment principle.

The product obtained by this second operative principle is good quality and has a residual moisture at the tolerance limits.

One known third operative principle is based on the only introduction of dry steam in the autoclave, without pre-heating, wherein the dry steam is already at 12-16 pressure bars. The subsequent and sudden opening of the autoclave valve causes the usual drop of pressure and the simultaneous ejection of the puffed product.

This operative principle is, for instance, disclosed in Italian Patent No. 01280395 of 14.03.1995.

Despite being convenient as far as the time for obtaining the product is concerned, which is definitely less than that required by a treatment according to the above described first operative principle (about 6 minutes against 30 minutes), this third operative principle requires more complex and expensive equipment such as for example a high pressure steam generator.

Furthermore, as regards the product, this is low quality, both as for lack of uniformity and high residual moisture, presence of lumps and consequently possible contamination by moulds and bacteria.

An object of the present invention is to reduce the time and heating temperature of the raw material inside the cylindrical container-autoclave and simultaneously obtain an end product with a lower moisture level and such as not to require subsequent heated expansion chambers and/or transitions into suitable driers.

This and other objects which will better appear from the following description, are obtained by an apparatus for puffing food products in form of grains according to the hereinafter referred claim 1.

The invention will now be better described referring to one of its preferred embodiment given for exemplary but non limiting purposes, with reference to the enclosed drawings wherein:
- figure 1 shows a longitudinal section view of the cylindrical container for puffing the product with its end provided with a valve for loading and ejecting the product at the end of the treatment, in open position;
- figure 2 shows a longitudinal section view of the cylindrical body positioned inside the container, coaxially therewith;
- figure 3 shows, in enlarged scale, the apparatus structure at the end provided with the valve for loading and ejecting the product;
- figure 4 shows, in enlarged scale, the apparatus structure at the end opposite to the one shown in figure 3;
- figure 5 shows the circuit diagram of the apparatus for air removal from inside the cylindrical container and the introduction of the heating fluid.

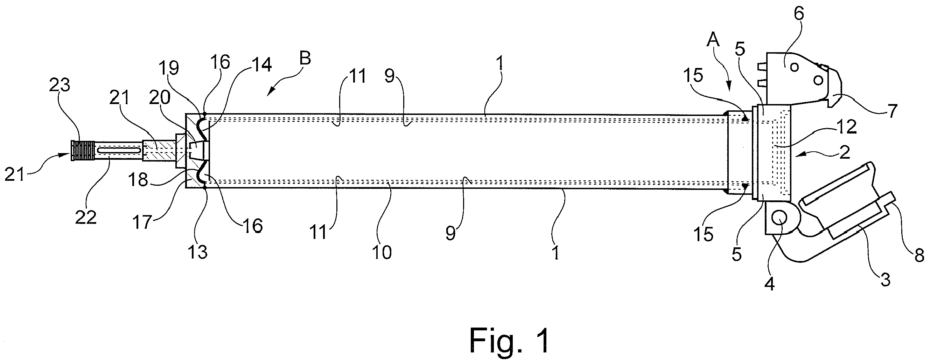

Referring to the aforementioned figures and particularly figure 1, the apparatus according to the invention comprises one cylindrical container 1, with cylindrical inner wall, fixedly mounted in horizontal position on a support, not illustrated as it is conventional, or, alternatively, in such a way as to rotate.

In the position underlying the aforesaid cylindrical container 1, the apparatus provides a heating apparatus, not illustrated in the enclosed drawings as it is also conventional, intended for cooking or in any case preheating the products to be treated, as will be seen hereinafter, introduced into container 1.

Such a device may imply a gas burner able to develop, for instance, 30,000 Kcal.

At the end, generally referred to as A, the container 1 is provided with an opening 2 on which an opening/closing door is mounted, rotatable about a pin 4 supported by a collar 5 fitted on the same end A of the container 1.

A locking device, generally referred to as 6, is mounted on the same collar 5 at the part opposite to the pin 4 The aforesaid locking device 6 comprises, for example, a latch 7 intended to engage with the protrusion 8 of the door 3 to keep the latter in closed position against the opening 2.

The latch 7 is conventionally connected to an automatic driving device, not shown, to obtain the release of the door 3 for ejecting the puffed product.

According to the invention, inside the cylindrical container 1 a cylindrical body 9 is positioned, with both cylindrical outer wall and inner wall, extending coaxially to the container 1 substantially from the end A thereof until the opposite end, generally referred to as B.

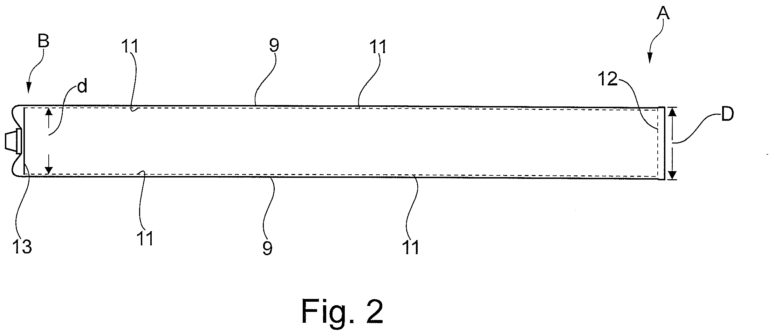

Referring to figure 2, it is noted that the aforesaid cylindrical body 9 has an external diameter "d" lower than the internal diameter "D" of the cylindrical container 1 with the subsequent formation of an annular gap 10 when the cylindrical body 9 is positioned coaxially inside the container 1.

For exemplary purposes, the diameter "d" may be 150 mm whereas the diameter "D" may be 154 mm with the formation of a 2 mm annular gap.

The cylindrical body 9 has a plurality of radial holes 11 within the thickness comprised between its external and internal cylindrical walls distributed both radially and longitudinally between the ends 12 and 13 which come to be positioned at end A and B respectively of container 1. Said holes 11 establish a communication between the annular gap 10 and the interior of the cylindrical container 1.

According to the invention, the end 12 of the cylindrical body 9 is completely open and positioned aligned with opening 2 of the cylindrical container 1, while the opposite end 13 is closed by a shaped wall 14.

The presence of annular seals 15 and 16 positioned between the external cylindrical wall of the cylindrical body 9 and the inner cylindrical wall of the cylindrical container 1 at the ends A and B, defines the sealing closure of the gap 10 with respect to the opening 2 and with respect to the outside of the shaped wall 14.

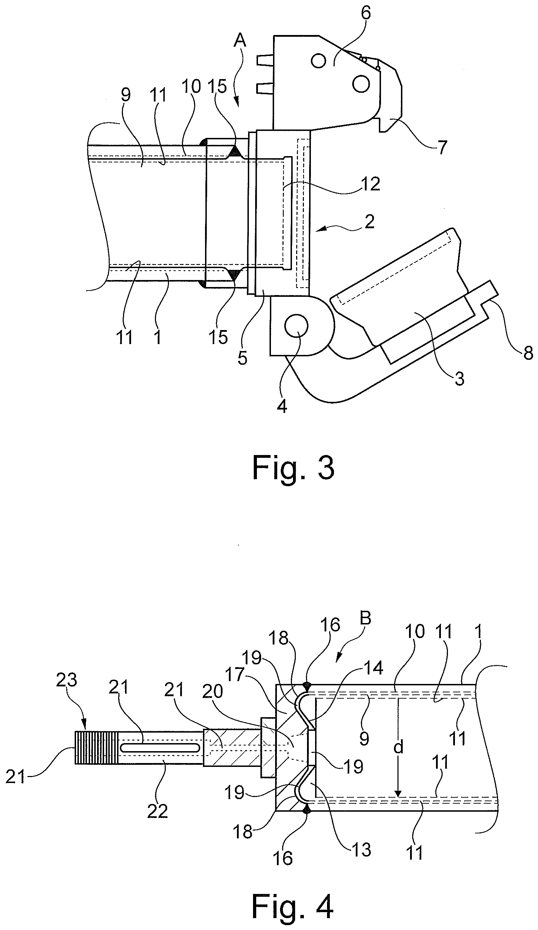

Against this latter shaped wall 14, as shown in enlarged scale in figure 4, a base 17 is positioned whose support surface 18 is shaped so as to match the wall 14 through the formation of an intermediate canalization 19 connecting the cavity 20 of the base 17 with the annular gap 10.

A conduit 21 arrives to the cavity 20 passing axially through a pin 22 at whose end 23 the devices external to the container 1 are fitted which, as will be seen in the following disclosure, are in charge of the treatment of the food products introduced in the container 1 thereof.

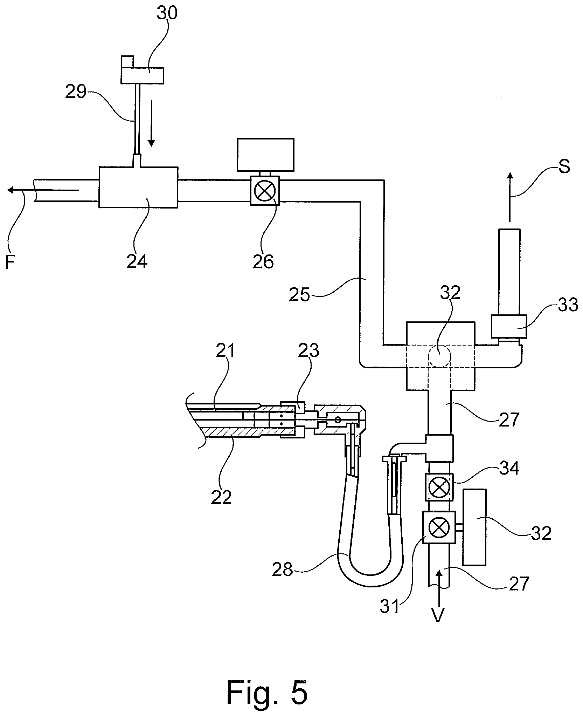

Referring to figure 5, the aforesaid devices external to the cylindrical container 1 comprise a device 24 for drawing out air and cooking steam of the preheated products within the container 1. The aforesaid device 24 is in the form of a Venturi tube inserted in the conduit 25. The latter is connected, through a shut-off member 26, to the conduit 27 and to the flexible fitting 28 arriving to the end 23 of the hollow pin 22 connected to the base 17.

The suction action of device 24 is determined by introducing compressed air into the device through the conduit 29 which is opened and closed by means of an electrovalve schematized in 30.

The outward exhaustion of the container 1, when the suction device 24 is in function, is indicated by the arrow F in figure 5.

According to the invention, such exhaustion carries out not only the so called discharge step of the container 1, but also a subsequent step of removing the air contained in the container 1 itself, both in case it is mounted on the support rotatably and fixedly, until obtaining a relative substantial vacuum inside it.

It is worth underlining at this point that the suction in the container 1, determined by device 24, occurs through the annular gap 10 and through the plurality of radial holes 11 of the cylindrical body 9 thus representing a barrier with respect to the product to be treated existing inside the container 1 and inside the same cylindrical body 9. Thanks to that barrier the suction of the product and its possible accumulation is prevented.

The devices placed outside the cylindrical container 1 also comprise one source of the heating fluid which, in this specific case, is composed of dry steam. Such source, indicated by arrow V in figure 5, enters the same conduits 27 and 28 and from them into the cylinder 1.

The introduction of dry steam is caused by the opening of a shut-off valve 31, controlled by the relative actuator 32, followed by a needle valve 34 allowing to adjust the steam introduction speed, positioned on the conduit 27.

The opening of the valve 31 clearly implies the preliminary closing of the valve 26 and the interruption of the compressed air supply to the Venturi suction device 24.

On the conduit 27 it is also provided the introduction of a detection device composed, for example, of a pressure switch schematized in 32, for managing operations and of a mechanical safety valve 33, always inserted, calibrated, for example, at a maximum pressure of 22 bars, which, in case of overpressure occurring in the dry steam supply, usually at a pressure between 10 and 16 bars, opens up and provides to exhaust the exceeding pressure, as indicated by the arrow S in figure 5.

From what above described referring to the enclosed drawings, it is appreciated that by means of the apparatus according to the invention, after the exhaustion of the air from inside the cylindrical container 1, after or during the discharge step, a relative vacuum condition is formed inside the container 1 making the container thereof behave as an autoclave.

By the introduction of dry steam it is thus possible to obtain an almost immediate drying of the food products in form of grains to be treated and puffed, obtaining a remarkable time reduction of the processing cycle and a better quality of the end product.

The apparatus according to the invention allows to perform a processing cycle according to the following modes:
a) Loading of the food product, possibly already pre-heated. It is possible to introduce in the cylindrical container 1 about 6/8 kgs. of rice, or other cereals or seeds at natural state with a variable moisture from 12 to 14%.
b) Closing, by a pneumatic system, of the door valve 3 or ball valve or any other type of valve adapted to keep the air-tightness of the closure of the container 1.
c) Initializing of the rotation of the container 1, in case the apparatus is prearranged for the rotation of the container, on the contrary the subsequent operative step follows.
d) Switching-on of the heating device for quickly heating the cylindrical container 1.
e) Suction of the air and water steam contained in the cylindrical container 1. The simultaneous suction of the air together with steam with the formation of a relative vacuum inside the cylindrical container 1, does no longer require an independent "discharge" step consisting in the outlet of the water steam formed at the end of the cooking process, resulting in the removal of mechanisms and time required for such an independent step.
f) Introduction of dry steam from an external generator through the conduit 27, through the opening of the shut-off valve 31 and adjustment of the transit speed with the needle valve 34. While the maximum pressure of the external generator may be 25/30 bars, however the operating pressure for puffing the product, thanks to the presence of a relative vacuum, according to the invention, inside the container 1, may be reduced of about 20% if compared to the 16 bars maximum values usually employed in the known art devices. This means being allowed to operate at 12-14 bars, with an important energy and costs saving due to the devices wear.
g) Opening of the door valve 3 or ball valve and quick ejection of the product already partially puffed in the cylindrical container 1.

The time required for the whole puffing cycle which, when performed with the apparatuses of the known art, varies from 60 to 180 minutes, according to the type of cereal treated, decreases to about one third with the employment of the apparatus according the present invention, by virtue of the possibility of suctioning, outside the container 1, together with the discharge steam, also air and to form a relative vacuum inside the container thereof 1 before introducing compressed dry steam.

The food product obtained with the apparatus according to the invention has better nutritious characteristics, taste, appearance, palatability and is better chewable than food products obtained with the methods and apparatuses of the known art, described in the premises of the present disclosure.
Though the invention has been described referring to one specific embodiment, it must be understood that the treatment, with compressed dry steam, vacuum-sealed directly in the cylindrical puffing container, shall be applied to any other type of apparatus for puffing and modifications shall also be applied, without departing from the scope of the appended claims.

## Claims

1. An apparatus for producing puffed grain food products comprising a cylindrical container (1) having a cylindrical inner wall, said container having a first end (A) with an opening (2) for loading the product to be puffed and for ejecting the puffed product, said opening (2) being equipped with a closing/opening member (3), a second end (B), opposite to the first end, said second end (B) being closed by a base (17), the latter having at least one opening (21) connected to a conduit (25) for permitting communication of the container (1) with the outside environment, and to a conduit (27) for alternatively permitting communication with a source (V) of heating fluid, for heating the products to be puffed in the container (1), said conduits (25, 27) being equipped with valve means (26, 31, 34), **characterized in that** it includes a cylindrical body (9), with inner and outer cylindrical walls, which is placed within said cylindrical container (1) and coaxially extends between the first (A) and second (B) ends of the container, said cylindrical body having, at its inner wall, a diameter (d) that is smaller than that (D) of the inner cylindrical wall of the container (1), to thereby form an annular gap (10) therebetween, said cylindrical body (9) having a plurality of radial holes (11) radially and longitudinally arranged in the thickness between its outer and inner cylindrical walls, and communicating between said annular gap (10) and the interior of the container (1), said cylindrical body (9) being also open at its end (12) that faces the opening (2) with the closing/opening member (3) of the cylindrical container (1) and being closed at the opposite end (13), the opening (20, 21) of said base being in communication with said annular gap (10).

2. An apparatus as claimed in claim 1, **characterized in that** it comprises annular seals (15, 16) between the outer cylindrical wall of said cylindrical body (9) and the inner cylindrical wall of said cylindrical container (1), said annular seals (15, 16) being situated at the opposite ends (A, B) of said cylindrical body (1).

3. An apparatus as claimed in claim 2, **characterized in that** said conduit (25) connected with said opening (20, 21) of said base (17) comprises a suction device (24) and a shut-off member (26) for connecting and disconnecting the suction device (24) to and from said conduit.

4. An apparatus as claimed in any of claims 1 to 3, wherein said suction device (24) is a Venturi vacuum pump, adapted to create an air vacuum inside the cylinder.

5. An apparatus as claimed in any of claims 1 to 4, **characterized in that** it comprises at least one overpressure detection member (32) and a safety member (33) in said conduit (27) connected to the opening of the base (17).

6. An apparatus as claimed in any of claims 1 to 5, wherein said grain food products to be puffed comprise cereals in general, rice, edible seeds as well as grain elements reconstituted from cereal and/or rice and/or edible seed flour.

7. An apparatus as claimed in any of claims 1 to 6, **characterized in that** said cylindrical container (1), with said coaxial cylindrical body (9) is placed with its longitudinal axis extending between the ends (A) and (B) in the horizontal position.

8) An apparatus as claimed in claim 7, **characterized in that** said cylindrical container (1), with said coaxial cylindrical body (9) is able to rotate about its longitudinal axis extending between the ends (A) and (B).

9. An apparatus as claimed in any of claims 1 to 8, **characterized in that** it comprises a heating device for externally heating said container (1), for pre-heating and precooking the food product to be treated in said cylinder (1).

10. A process for producing puffed grain food products comprising a step of precooking the products in a closed container (1) by steam generation, the step of exhausting the steam out of said container (1), a later step of introducing pressurized dry steam into said container (1) and the final step of opening the container (1) and ejecting the puffed food product, **characterized in that**, as steam is exhausted out of the closed container (1), air is also drawn out, and a relative vacuum, is thus created in said closed container (1). 3
